Europäisches Patentamt

European Patent Office

Office européen des brevets

(19)

(11) Numéro de publication : **0 150 632**
**B1**

(12) **FASCICULE DE BREVET EUROPÉEN**

(45) Date de publication du fascicule du brevet :
06.05.87

(51) Int. Cl.⁴ : **B 65 G 65/46**

(21) Numéro de dépôt : **84400215.4**

(22) Date de dépôt : **01.02.84**

(54) **Dispositif pour l'évacuation de produits pulvérulents contenus dans un silo.**

(43) Date de publication de la demande :
07.08.85 Bulletin 85/32

(45) Mention de la délivrance du brevet :
06.05.87 Bulletin 87/19

(84) Etats contractants désignés :
**AT BE CH DE FR GB IT LI LU NL SE**

(56) Documents cités :
**DE-C- 340 821**
**FR-A- 1 256 579**
**FR-A- 2 309 691**
**FR-A- 2 449 048**
**FR-A- 2 515 618**
**US-A- 3 802 583**

(73) Titulaire : **GUERY S.A. Société Anonyme**
**7, route de Chemillé La Touriandry**
**F-49120 Chemille (FR)**

(72) Inventeur : **Petit, Raymond**
**6 à 8 rue Jean Perrin**
**F-37000 Tours (FR)**

(74) Mandataire : **Descourtieux, Philippe et al**
**CABINET BEAU de LOMENIE 55 rue d'Amsterdam**
**F-75008 Paris (FR)**

## Description

On connaît déjà, notamment par les brevets FR-A-1 256 579, FR-A-2 449 048 des dispositifs de vidange de silo à fond plat, contenant des produits granuleux ou pulvérulents. Toutefois les dispositifs de ce genre exigent certains travaux importants de maçonnerie pour leur utilisation et sont en outre relativement compliqués et onéreux.

La présente invention concerne un dispositif de vidange du genre en question susceptible d'être adapté à des silos de toutes dimensions, ce dispositif étant destiné à être simplement posé et fixé sur un sol plat. Une telle installation est connue du document FR-A-2 515 618 sur lequel est basé le préambule de la revendication 1.

Dans cette installation connue le fond d'un silo comporte une base inférieure et un plateau supérieur constituant le support du dispositif d'évacuation. En outre, le plateau supérieur est muni, à sa périphérie, d'une collerette radiale susceptible d'être balayée par des palettes.

Le dispositif de vidange de silo comporte un bras horizontal radial équipé d'une vis d'Archimède, ledit bras étant disposé en voisinage immédiat du plateau supérieur du fond du silo. Ce bras est d'autre part monté sur une tourelle dont l'axe de pivotement coïncide sensiblement avec l'axe du silo. Un arbre vertical fixe, disposé à l'intérieur de la tourelle porte un premier pignon coopérant avec un deuxième pignon calé sur l'arbre de la vis d'Archimède, cependant que des moyens sont prévus pour assurer l'entraînement en rotation du bras et de la tourelle autour de l'axe du silo, ainsi que le déplacement des palettes sur la collerette. De tels moyens comportent notamment un moteur et sont situés principalement entre la base et le plateau du fond du silo.

L'objet de la présente invention est d'améliorer ce dispositif connu, et notamment le système d'entraînement du bras.

Selon l'invention, la base et le plateau supérieur du fond du silo sont reliés l'un à l'autre pour constituer un caisson cylindrique de diamètre inférieur à celui du silo, cependant que la collerette qui s'étend radialement jusqu'à la paroi cylindrique du silo est située en dessous du plateau supérieur et définit avec ce dernier une gorge périphérique constituant un logement pour une chaîne sans fin, à laquelle est attelée l'extrémité radialement extérieure du bras pivotant, et présentant une ouverture dans laquelle est situé un barbotin coopérant avec la chaîne et entraîné par le moteur situé à l'intérieur du caisson.

L'invention sera mieux comprise et d'autres caractéristiques ainsi que ses avantages apparaîtront au cours de la description qui va suivre d'un mode de réalisation avantageux, donné uniquement à titre d'exemple.

A cet effet on se référera au dessin annexé dans lequel

la figure 1 est une vue schématique en élévation et en coupe d'un silo équipé d'un dispositif de vidange selon l'invention

la figure 2 est une vue en plan du dispositif représenté sur la figure 1.

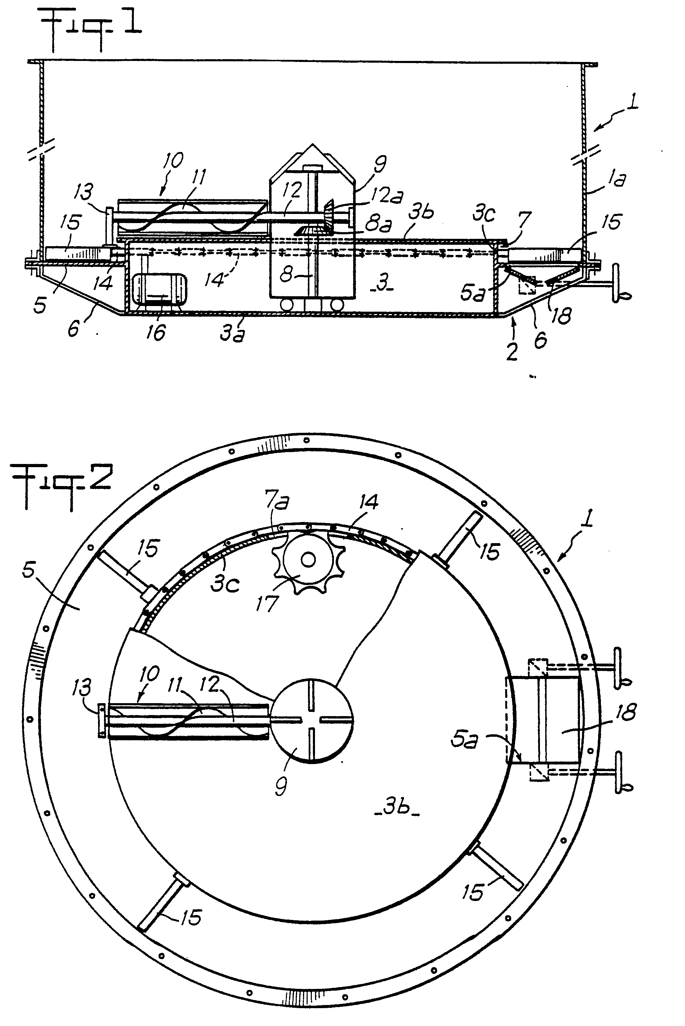

Si l'on se reporte au dessin on voit un silo cylindrique désigné par la référence générale 1 disposé au-dessus d'un dispositif de vidange désigné par la référence générale 2.

Le support du dispositif, qui est également le fond inférieur du silo est constitué par un caisson cylindrique 3 dont la base 3a repose simplement sur un sol plat où elle est ancrée par tout moyen convenable. Le caisson 3 présente un diamètre inférieur à celui de la paroi cylindrique 1a du silo et comporte à sa partie supérieure, à quelque distance en dessous du plateau supérieur 3b, une collerette 5 s'étendant radialement jusqu'à la paroi 1a du silo sur laquelle elle est fixée par tout moyen convenable.

La périphérie externe de la collerette 5 est reliée à la base 3a du caisson par des éléments de renfort appropriés 6, de préférence à claire-voie.

Ainsi la structure qui vient d'être décrite est suffisamment rigide pour supporter le poids du silo et des matières granuleuses ou pulvérulentes qu'il peut contenir ; d'autre part le plateau supérieur saillant 3b du caisson et la collerette 5 définissent, avec la paroi cylindrique 3c du caisson, une gorge périphérique 7 dont le rôle sera précisé plus loin.

Un arbre vertical 8 est fixé sur la base 3a du caisson, sensiblement dans l'axe du silo, et constitue un pivot pour le dispositif de vidange proprement dit que l'on va décrire maintenant.

Une tourelle 9 est montée pivotante autour de l'arbre 8 et supporte elle-même un bras horizontal 10, disposé radialement. Celui-ci est équipé d'une vis d'Archimède 11 dont l'arbre 12 peut pivoter dans des paliers portés par la tourelle. L'arbre 8 porte un premier pignon fixe 8a engrenant avec un deuxième pignon 12a calé sur l'arbre 12.

L'extrémité extérieure de l'arbre 12 est montée pivotante dans un support vertical 13, lui-même fixé sur l'un des maillons d'une chaîne sans fin 14 disposée dans la gorge 7 du caisson 3.

Des organes de support et de roulement sont évidemment prévus pour faciliter le déplacement de la chaîne 14 dans la gorge 7 dans des conditions que l'on précisera plus loin.

Sur certains maillons de la chaîne 14 sont fixées des palettes 15, de préférence radiales, situées au voisinage immédiat de la surface supérieure de la collerette 5. Cette dernière présente d'autre part au moins une ouverture 5a, susceptible d'être obturée par une vanne réglable 18 et destinée à permettre l'écoulement des produits à l'extérieur du silo où ils sont recueillis et transportés par tout moyen convenable.

Enfin un moteur 16 est de préférence logé dans le caisson 3 et son arbre porte un barbotin 17 coopérant avec les maillons de la chaîne 14 grâce à une ouverture 7a ménagée dans la gorge 7.

Le fonctionnement du dispositif est alors le suivant.

La rotation du moteur 16 entraîne celle du barbotin 17 et par suite le déplacement de la chaîne 14 dans son logement circulaire 7. Le support 13 lié à la chaîne 14 entraîne le bras horizontal 10 qui pivote ainsi que la tourelle 9, autour de l'arbre vertical 8. Grâce à la coopération des deux pignons 8a et 12a, l'arbre 12 tourne sur lui-même de sorte que la vis d'Archimède 11 transporte les produits contenus dans le silo et les déverse sur la collerette 6. Dans le même temps les palettes 15 raclent les produits se trouvant sur la collerette et les amènent au-dessus de l'ouverture 6a, par où ils sont évacués vers l'extérieur.

## Revendications

1. Dispositif permettant l'évacuation de produits pulvérulents contenus dans un silo cylindrique (1), la sortie desdits produits s'effectuant dans une zone appropriée du fond du silo, lequel comporte, d'une part, une base inférieure (3a), d'autre part un plateau supérieur (3b) dont la périphérie est munie d'une collerette radiale (5), le dispositif d'évacuation étant lui-même constitué par un bras horizontal radial (10) destiné à amener, sur la collerette (5), les produits à évacuer, ledit bras, équipé d'une vis d'Archimède (11), étant supporté par le plateau supérieur (3b) du silo et étant monté sur une tourelle (9) dont l'axe de pivotement coïncide sensiblement avec l'axe du silo, cependant qu'un arbre vertical fixe (8), disposé à l'intérieur de la tourelle dans l'axe du silo, porte un premier pignon (8a) coopérant avec un deuxième pignon (12a) calé sur l'arbre (12) de la vis d'Archimède, des moyens, comportant un moteur (16) situé entre la base inférieure (3a) et le plateau supérieur (3b), étant d'autre part prévus pour assurer l'entraînement en rotation, aussi bien du bras et de la tourelle autour de l'axe du silo, que de palettes radiales et horizontales (15) situées au voisinage immédiat de la collerette (5), caractérisé en ce que la base (3a) et le plateau supérieur (3b) sont reliés l'un à l'autre pour constituer un caisson cylindrique (3), de diamètre inférieur à celui du silo (1a), cependant que la collerette (5) qui s'étend radialement jusqu'à la paroi cylindrique (1a) du silo est située en dessous du plateau supérieur (3b) et définit avec ce dernier une gorge périphérique (7) constituant un logement pour une chaîne sans fin (14) à laquelle est attelée l'extrémité radialement extérieure du bras (10), et présentant une ouverture (7a) dans laquelle est situé un barbotin (17) coopérant avec la chaîne (14) et entraîné par le moteur (16) situé à l'intérieur du caisson (3).

2. Dispositif selon la revendication 1, caractérisé en ce que la chaîne (14) supporte les palettes radiales et horizontales (15).

3. Dispositif selon la revendication 2, caractérisé en ce qu'au moins une ouverture (5a) est ménagée dans la collerette (5), du caisson, ladite ouverture constituant un conduit d'évacuation et étant équipée d'un organe réglable d'obturation (18).

## Claims

1. Device permitting the discharge of pulverulent products contained in a cylindrical silo (1), the discharge of said products occurring in a suitable part of the bottom of the silo, which latter comprises, on the one hand, a lower base (3a), and on the other hand, an upper plate (3b) the periphery of which is provided with a radial flange (5), the discharge device being itself constituted by a horizontal radial arm (10) designed to bring, onto the flange (5), the products to be discharged, said arm, which is equipped with a lifting screw (11), being supported by the upper plate (3b) of the silo and being mounted on a turret (9) the pivoting axis of which substantially coincides with the axis of the silo, whereas a fixed vertical shaft (8) disposed inside the turret in the direction of the axis of the silo, carries a first pinion (8a) which cooperates with a second pinion (12a) fixed on the shaft (12) of the lifting screw, means comprising a motor (16) situated between the lower base (3a) and the upper plate (3b) being also provided to drive in rotation the arm and the turret about the axis of the silo, as well as radial and horizontal blades (15) situated in the immediate vicinity of the flange (5), characterized in that the base (3a) and the upper plate (3b) are interconnected in order to constitute a cylindrical tank (3) of diameter smaller than that of the silo (1a), whereas the flange (5) which extends radially as far as the cylindrical wall (1a) of the silo is situated beneath the upper plate (3b) and defines therewith a peripheral groove (7) which constitutes a housing for an endless chain (14) to which is attached the radially external end of the arm (10), and which is provided with an opening (7a) in which is engaged a sprocket wheel (17) which cooperates with the chain (14) and which is driven by the motor (16) situated inside the tank (3).

2. Device according to claim 1, characterized in that the chain (14) supports the horizontal and radial blades (15).

3. Device according to claim 2, characterized in that at least one opening (5a) is provided in the flange (5) of the tank, said opening constituting a discharge outlet and being equipped with an adjustable closing member (18).

## Patentansprüche

1. Vorrichtung zum Entleeren von in einem zylindrischen Silo (1) enthaltenem pulverförmigen Gut, wobei der Austrag des Guts in einer geeigneten Zone des Bodens des Silos erfolgt, welcher einerseits eine untere Basis (3a), anderseits eine obere Platte (3b) aufweist, deren Umfang mit einem radialen Flansch (5) versehen ist, wobei die Austragseinrichtung selbst durch einen radialen horizontalen Arm (10) gebildet ist, der das zu entleerende Gut auf den Flansch (5) bringen soll, wobei der Arm, der mit einer Archimedischen Schnecke (11) ausgestattet ist, von der oberen Platte (3b) des Silos getragen und auf einem Aufbau (9) montiert ist, dessen Schwenkachse im wesentlichen mit der Achse des Silos zusammenfällt, wobei eine ortsfeste vertikale Welle (8), die im Inneren des Aufbaus in der Achse des Silos angeordnet ist, ein erstes Ritzel (8a) trägt, das mit einem zweiten, auf der Welle (12) der Archimedischen Schnecke aufgesteckten Ritzel (12a) zusammenwirkt, wobei weiters Mittel mit einem zwischen der unteren Basis (3a) und der oberen Platte (3b) befindlichen Motor (16) zur Gewährleistung des Rotationsantriebs sowohl des Arms und des Aufbaus um die Achse des Silos als auch von unmittelbar neben dem Flansch (5) befindlichen radialen und horizontalen Schaufeln (15) vorgesehen sind, dadurch gekennzeichnet, daß die Basis (3a) und die obere Platte (3b) zur Bildung eines zylindrischen Kastens (3) von einem geringeren Durchmesser als der Silo (1a) miteinander verbunden sind, wobei sich der Flansch (5), der sich radial bis zur zylindrischen Wand (1a) des Silos erstreckt, unterhalb der oberen Platte (3b) befindet und mit letzterer eine periphere Auskehlung (7) begrenzt, welche einen Sitz für eine Endloskette (14) bildet, an der das radial äußere Ende des Arms (10) befestigt ist, und eine Öffnung (7a) aufweist, in der sich ein Kettenrad (17) befindet, das mit der Kette (14) zusammenwirkt und von dem innerhalb des Kastens (3) befindlichen Motor (16) angetrieben ist.

2. Vorrichtung nach Anspruch 1, dadurch gekennzeichnet, daß die Kette (14) die radialen und horizontalen Schaufeln (15) trägt.

3. Vorrichtung nach Anspruch 2, dadurch gekennzeichnet, daß mindestens eine Öffnung (5a) im Flansch (5) des Kastens vorgesehen ist, welche Öffnung eine Austragsleitung bildet und mit einem regulierbaren Verschlußorgan (18) versehen ist.

Fig.1

Fig.2